# EUROPEAN PATENT APPLICATION

(11) **EP 4 810 363 A1**
(43) Date of publication of application: **23.09.2026**
(21) Application number: 25164518.0
(22) Date of filing: 18.03.2025
(51) Int. Cl.: B62K 27/00, B62K 27/12, B62J 7/04

(54) **FOLDABLE CART SYSTEM FOR CYCLES, AND A METHOD OF MANUFACTURING THEREOF**

(60) Divisional application: 26178959.8
(71) Applicant: Salama Mostafa, Mohamad Ibrahim, 5582 JZ Waalre (NL)
(72) Inventor: Salama Mostafa, Mohamad Ibrahim, 5582 JZ Waalre (NL)
(74) Representative: V.O.

(57) **Abstract**

The present invention relates to a foldable cart system configured for attachment to a cycle's rear portion. The system comprises a carrier secured to or near the rear section of the cycle featuring a mounting structure to support the cart body. The wheeled cart body is pivotally connected to the carrier, allowing for versatile positioning. This cart body is configured to transport one or more objects and can be adjusted between two positions: an extended position, where the cart is deployed rearwardly, engaging its wheels with the ground for mobility, and a folded position, where the cart body is compactly folded and supported on the cycle's rear portion, with its wheels repositioned to an inoperative state. The transition between these positions facilitates easy storage and transport. The system is configured to ensure stability during movement and compactness when not in use, providing an efficient solution for cyclists requiring additional carrying capacity.

## Description

### FIELD OF THE INVENTION

The invention relates to a foldable cart system. The invention also relates to a method of manufacturing a foldable cart system for use with a cycle. Furthermore, the invention relates to a cycle with a foldable cart system. Further, the invention relates to systems and methods for providing additional cargo-carrying capabilities to cycles. Additionally, the invention relates to the use of the foldable cart system. Also, the invention relates to a kit of parts for the foldable cart system.

### BACKGROUND TO THE INVENTION

Cycles are a widely used mode of transportation due to their efficiency, environmental friendliness, and health benefits. As cycling becomes increasingly popular for both commuting and recreational purposes, there is a growing demand for accessories that enhance the utility of cycles. One such accessory is the cycle cart, which allows riders to transport cargo, ranging from personal items to groceries and other goods.

Traditional cycle carts have been useful for increasing the cargo-carrying capacity of cycles. However, they often come with limitations that affect convenience and functionality. Many existing bicycle carts are bulky and take a lot of space, making them difficult to store or transport when not in use. Their fixed size can pose challenges in navigating through tight spaces or congested areas, and they can be cumbersome for riders who need a more compact solution.

Moreover, conventional bicycle carts are typically configured with a single function in mind, namely carrying cargo. This lack of versatility means that riders who wish to perform multiple tasks, such as towing another bicycle or adapting the cart for different types of loads, must invest in additional equipment or accessories. This can be both inconvenient and costly.

In the case of bicycle racks or trays mounted behind the seat, these accessories often offer limited cargo capacity. They are usually of fixed dimensions and cannot be adjusted to accommodate larger or varying sizes of cargo. This restricts the types of items that can be transported and does not provide the flexibility that many riders require.

Transporting additional bicycles presents another challenge. Existing methods for towing bicycles often involve makeshift solutions that may not be secure or safe. They can be incompatible with different bicycle sizes and may not allow for towing multiple bicycles simultaneously. This creates difficulties for families or groups looking to travel together by bicycle or for situations where a rider needs to transport extra bicycles over a distance.

Folding bicycles, while convenient for their portability and space-saving design, introduce their own set of challenges. When folded, these bicycles can be awkward and heavy to carry, especially over long distances or in environments such as markets or public transportation hubs where riding is not permitted. Users may find it inconvenient to carry the folded bicycle by hand, leading to discomfort and reduced mobility.

Furthermore, there is a lack of solutions that integrate multiple functionalities into a single, compact accessory. Riders often have to choose between carrying multiple accessories for different purposes or compromising on certain functionalities. This lack of integration can detract from the overall cycling experience, especially for those who use their bicycles for a variety of tasks and in different settings.

Therefore, there is a clear need for an improved bicycle accessory that addresses these limitations. Such an accessory would ideally be easily stored, multifunctional to serve various purposes, and/or adaptable to different bicycle sizes and types. It would enhance the rider's ability to transport cargo efficiently. Solving these problems would significantly improve the practicality and convenience of using bicycles for a wider range of activities.

### SUMMARY OF THE INVENTION

It is an object of the invention to provide for a method and a system that obviates at least one of the above mentioned drawbacks.

Additionally or alternatively, it is an object of the invention to provide for an improved cycle cart system.

Additionally or alternatively, it is an object of the invention to improve the functionality and versatility of bicycle carts for use with both regular and folding bicycles.

Additionally or alternatively, it is an object of the invention to provide a cycle cart that can easily accommodate various cargo and towing needs.

Thereto, the invention provides for a foldable cart system for use with a cycle, the system being configured to be attachable to a rear portion of the cycle, the foldable cart system comprising: a carrier configured to be secured at or adjacent to the rear portion of the cycle, the carrier including a mounting structure; and a wheeled cart body pivotally coupled to the carrier, the cart body being configured to carry one or more objects, and wherein the cart body is adjustable between at least an extended position, in which the cart body is deployed rearwardly of the cycle such that its wheels are arranged for operative engagement with the ground, and a folded position, in which the cart body is folded into a compacted configuration and supported upon the rear portion of the cycle such that its wheels are repositioned to a non-operational state.

The foldable cart system, that is configured for attachment to a cycle, offers an adaptable cargo solution that enhances the utility of the cycle without permanently altering its profile or handling characteristics. The system comprises a carrier configured to be secured at or adjacent to the rear portion of the cycle, the carrier including a mounting structure that ensures stable attachment. Pivotally coupled to the carrier is a wheeled cart body configured to carry one or more objects. This important connection allows the cart body to adjust between two primary configurations: an extended position and a folded position.

In the extended position, the cart body is deployed rearwardly of the cycle with its wheels arranged for operative engagement with the ground. This configuration transforms the cycle into a cargo-carrying vehicle capable of transporting substantial loads efficiently. The cart body's wheels support the weight of the cargo, thereby minimizing any adverse impact on the cycle's balance and maneuverability. The extended position is achieved through an adjustment facilitated by the coupling, allowing users to swiftly prepare the cycle for cargo transportation as needed.

When cargo transport is not required, the cart body can be transitioned into the folded position. In this compacted configuration, the cart body is folded and supported upon the rear portion of the cycle, with its wheels repositioned to a non-operational state. This folding mechanism is configured to reduce the cart body's spatial footprint, ensuring that it does not protrude significantly beyond the cycle's existing dimensions. The folded cart body rests securely on the carrier, maintaining the cycle's aesthetic appeal and aerodynamic profile while enhancing safety by eliminating extraneous parts that can interfere with the rider or surroundings.

The mounting structure of the carrier is configured to accommodate the mechanical stresses of both riding and cargo transport. A significant advantage of this invention is the enhanced functionality it provides to cyclists. By allowing for quick and effortless transitions between cargo-carrying and standard riding modes, the foldable cart system offers exceptional convenience. Users can adapt their cycles to meet varying transportation needs without the limitations imposed by permanent attachments or bulky add-ons.

Optionally, in the folded position, the cart body is configured to serve as a tray positioned behind a seat of the cycle, wherein the tray is configured to support cargo.

The tray formed by the folded cart body is configured to support cargo, providing a convenient platform for smaller items or personal belongings. This dual-purpose design maximizes space efficiency by utilizing the area behind the seat that may otherwise remain unused.

The cart body, when folded into the tray position, maintains a streamlined profile that does not significantly alter the balance or handling of the cycle. By serving as both a full-sized cart and a convenient rear tray, the foldable cart system offers versatility and adaptability to meet the varying needs of the rider.

Optionally, the cart body comprises a base portion and side portions, at least one of the portions is adjustably extendable to increase or decrease a cart body's cargo-carrying space.

This adjustability allows the cart system to accommodate a wide range of cargo sizes and shapes, providing enhanced flexibility for the user. For example, the base portion may be configured with telescoping segments or sliding panels that enable the length or width of the base to be modified according to the specific transport needs. Similarly, the side portions may feature hinging or expanding mechanisms that allow them to extend upward or outward, securing larger or bulkier items effectively.

By enabling the cart body's dimensions to be increased or decreased, the system adapts to specific transport requirements, improving load stability. This feature is particularly beneficial when transporting items of varying sizes. The ability to modify the cargo space ensures that each load is carried securely, reducing the risk of items shifting or becoming unstable during transit.

Additionally, the adjustably extendable portions contribute to the cart system's versatility by allowing it to remain compact when not in use or when transporting smaller loads. When the additional cargo space is unnecessary, the extendable portions can be retracted or folded back into the main structure of the cart body, minimizing its overall size. This compact configuration is advantageous for storage and maneuverability, especially in confined spaces or when navigating through crowded areas.

The structural implementation of the adjustably extendable base and side portions may involve mechanical components such as sliding tracks, telescopic rails, hinges, or locking mechanisms. These components are configured to provide smooth operation and reliable locking in both the extended and retracted positions.

Optionally, the cart body comprises a sliding mechanism for adjusting a width of the base portion in at least one of the extended position or the folded position.

This sliding mechanism allows for the seamless expansion or contraction of the base portion's width, providing adaptability to accommodate various cargo sizes. The sliding mechanism may comprise telescoping members, rails, or similar structural components integrated into the base portion. These components are configured to move relative to each other, enabling the base portion to transition smoothly between a narrower and a wider configuration. The design ensures that adjustments to the width can be performed quickly and effortlessly by the user, without the need for tools or disassembly of any cart components.

When the cart body is in the extended position, the ability to widen the base portion enhances the cart's capacity to carry bulkier or wider cargo, thus increasing the utility of the cycle for transporting a diverse range of items. In the folded position, adjusting the base portion's width allows the tray to provide a larger surface area, facilitating the support of additional cargo or the attachment of accessories such as panniers or saddle bags.

Optionally, the carrier is configured to be detachable from the cycle by way of detachment mechanism that does not require the use of tools, such as for example a quick-release mechanism.

This design allows the carrier, along with the attached foldable cart body, to be easily attached to or detached from the rear portion of the cycle without the need for any specialized equipment or tools. The quick-release mechanism may comprise a lever-actuated clamp or a camming device that can be operated manually by the user. By simply engaging or disengaging the mechanism, the carrier can be firmly secured to or released from the mounting point on the cycle, which may be located around or adjacent to the seat tube. This tool-free detachment system provides the advantage of effortless installation and removal of the foldable cart system, significantly enhancing portability and convenience. Users can rapidly attach the cart system when needed for transporting cargo and detach it when not in use, promoting flexibility in adapting the cycle to different needs.

Optionally, the cart body includes upstanding walls along at least two sides of the base portion, the upstanding walls being pivotable or foldable to reduce the profile of the cart body when in the folded position.

The upstanding walls are connected to the base portion through hinges or pivot joints, allowing them to move between an upright operative position and a folded stowed position. In the operative position, the walls extend upwardly from the base portion to form a containment area, effectively preventing cargo from sliding off the cart during use. This feature enhances the cart's utility by securely accommodating various types of loads, such as shopping bags, boxes, and other items that may otherwise shift during transportation.

When the cart is not in active use or when a more compact form is desired for storage or transport, the upstanding walls can be folded down against the base portion. This folding action substantially reduces the overall dimensions of the cart body, minimizing space occupation and making it more convenient to handle or store. The reduction in profile also decreases aerodynamic drag when the cart is attached to the cycle but not carrying a load, improving the efficiency and ease of cycling.

The folding mechanism of the upstanding walls may involve hinged connections that allow for smooth rotation, or sliding arrangements that enable the walls to retract alongside the base portion. Locking elements such as latches or detent pins may be incorporated to secure the walls in both the upright and folded positions, ensuring stability and preventing unintended movement during operation or transit. The materials selected for the upstanding walls are preferably lightweight yet robust, such as aluminum alloys or durable plastics, to maintain structural integrity without adding excessive weight to the cart.

In certain embodiments, the cart body includes upstanding walls on all four sides of the base portion, with at least the side walls being pivotable or foldable. This configuration provides maximum versatility, allowing the cart to accommodate a wide range of cargo sizes and shapes while still being able to attain a compact form when needed. The user can readily adjust the walls without the need for tools or complex procedures, facilitating quick transitions between different operational modes.

Optionally, a towing bracket is provided that is configured to secure at least one additional cycle to the cart body when the cart body is in the extended position.

The towing bracket can be configured to be integrally attached to the cart body, providing a stable and robust connection point for the additional cycle. When the cart body is deployed rearwardly of the cycle, the towing bracket extends rearwardly as well, allowing it to engage with the frame or components of the additional cycle to be towed.

In practical use, the towing bracket facilitates the secure attachment of another cycle by means of adjustable clamps, hooks, or similar fastening mechanisms. These mechanisms are capable of accommodating various sizes and types of cycles, ensuring compatibility and ease of use.

The positioning of the towing bracket on the cart body ensures that the additional cycle is aligned properly behind the primary cycle, promoting stable and predictable handling characteristics.

By integrating the towing bracket into the foldable cart system, the utility of the system is significantly enhanced. It enables the user to transport at least one additional cycle conveniently, which is particularly beneficial in scenarios such as group rides where a member's cycle becomes inoperative, family outings requiring the transport of children's cycles, or in situations where an extra cycle needs to be moved without being ridden. The towing bracket adds this functionality without necessitating significant changes to the overall design or compromising the foldability and compactness of the cart system.

When the cart body is adjusted to the folded position, the towing bracket is configured such that it does not interfere with the compacted configuration. It may retract, fold, or be positioned in a manner that maintains the sleek profile of the cart system when not in use for towing. This ensures that the additional functionality provided by the towing bracket does not detract from the convenience and ease of storage and transport of the foldable cart system.

Optionally, one or more locking/releasing elements are provided operable to releasably secure the cart body in each of the extended position and the folded position.

In the extended position, the locking elements can engage to hold the cart body securely deployed rearwardly of the cycle, with its wheels in operative engagement with the ground. This ensures that the cart can reliably carry cargo without the risk of unintended folding or movement, which can compromise balance or lead to accidents. When adjusting the cart body to the folded position, the locking elements activate to secure it in a compacted configuration supported upon the rear portion of the cycle. This prevents the cart body from unintentionally deploying while the cycle is in motion, which can interfere with the rider's control or pose a safety hazard.

The locking elements may comprise mechanical latches, pins, or clamps that interact with corresponding features on the carrier and cart body. For example, a spring-loaded pin can engage a hole or notch when the cart reaches the desired position, providing a tactile and audible confirmation of engagement.

The design of the locking elements allows for easy operation by the user, facilitating quick transitions between the extended and folded positions without the need for tools.

Optionally, the carrier is configured to attach around or adjacent to a seat tube of the cycle the cart body is positionable immediately behind the cycle seat in the folded position to form a rear tray.

This carrier serves as a robust mounting structure for the cart body and is positioned to exploit the space directly behind the cycle's seat. When the cart body is in the folded position, it is pivotally positioned immediately behind the seat, forming a rear tray that is both practical and unobtrusive.

The placement of the cart body immediately behind the cycle seat offers significant advantages. By centralizing the weight of the folded cart system along the seat tube, the overall balance of the cycle is enhanced, contributing to improved handling and stability during operation. This centralized weight distribution ensures that the added mass does not adversely affect the rider's control over the cycle.

Additionally, utilizing the area around the seat tube for the carrier and folded cart body optimizes space without encumbering the rider or extending beyond the rear wheel of the cycle. The rear tray formed when the cart body is folded provides a convenient platform for carrying smaller items or personal belongings. This design ensures that the cart system does not interfere with the rider's pedaling motion or seating position, allowing for seamless integration into the cycle's existing structure.

The configuration also facilitates easy transition between the folded and extended positions of the cart body. The carrier's attachment around or adjacent to the seat tube allows the cart body to pivot smoothly into place behind the seat. This mechanism not only simplifies the folding process but also secures the cart body firmly in the folded position, preventing unintended movement during the ride.

Optionally, the cart body is configured such that in the folded position it does not substantially extend beyond the cycle's rear wheel.

When transitioned to the folded position, the cart body folds into a compact configuration and is supported upon the rear portion of the cycle, typically positioned immediately behind the seat. In this state, the cart body aligns closely with the vertical profile of the cycle, ensuring that its dimensions are contained within the spatial bounds defined by the rear wheel.

This compact design offers significant advantages. By not extending substantially beyond the cycle's rear wheel, the cart body maintains the standard footprint of the cycle. This preservation of the cycle's original dimensions ensures that the rider's ability to maneuver the cycle remains uncompromised. Navigating through tight spaces, congested urban areas, or narrow pathways becomes as manageable as it would be without the cart system attached. The risk of the cart protruding and causing obstructions or safety hazards is effectively mitigated.

The folding mechanism of the cart body plays an important role in achieving this compactness. Through a series of pivots and collapsible components, the cart body retracts from its extended cargo-carrying position to a folded orientation that conforms to the cycle's frame.

Additionally, the ability of the cart body to fold without substantially extending beyond the rear wheel enhances the ease of storage and transportation of the cycle itself. Users can store the cycle in standard bicycle racks, residential storage spaces, or transport it using public transit systems without the inconvenience of additional protruding parts.

Optionally, the carrier and the cart body are interconnected via an adaptable folding arrangement comprising: a first connection point at or adjacent to the carrier a second connection point at or adjacent to the cart body; and a third connection point disposed between the first connection point and the second connection point; wherein the first connection point and the second connection point each include a pivot element permitting at least a single axis of rotation for adjusting the angle of the cart body relative to the carrier; wherein the third connection point provides for at least two axes of rotation of the cart body relative to the carrier, wherein the third connection point is configured to permit a first rotation around an axis parallel to a longitudinal direction of the foldable cart system, so as to enable the cart body to rotate at least 180 degrees relative to the carrier, so as to invert the upper side of the cart body from an upward-facing orientation to a downward-facing orientation, and wherein the third connection point is further configured to permit a second rotation around an axis parallel to a lateral direction of the foldable cart system, such that when the cart body has been inverted, it is then rotatable to rest atop the carrier with the cart body's upper side returned to an upward-facing orientation.

The folding arrangement includes three distinct pivot regions that collectively enable the cart body to reverse its orientation and subsequently return to an upright state atop the carrier. More specifically, a first pivot region is located adjacent to the carrier, anchoring the assembly in place and allowing initial angular movement. A second pivot location resides near or at the cart body itself, ensuring that the cart body can tilt or swivel as needed. Between these two, a third pivot region provides a multi-axis junction, granting rotation about both the longitudinal and lateral directions of the cart system. This combination of hinge points makes it possible for the cart body to undergo a complete inversion, flipping from an upward-facing orientation to a downward-facing one, and then pivot once again so that it is positioned upright on the carrier. By permitting this full range of motion, the cart body can be folded into a compact form factor with minimal profile, significantly simplifying the task of stowing the cart system behind the bicycle seat or within tight storage spaces. At the same time, the pivoting mechanics allow the cart body to smoothly transition back to its extended position without necessitating disassembly or complex realignment. In this way, the third pivot region's additional axes of rotation provide a reliable structural pathway for inverting and reorienting the cart body, providing a space-saving advantage while preserving ease of deployment.

Optionally, the folding arrangement is configured such that in a first folding step, the cart body rotates approximately 90 degrees about the longitudinal axis of the cart system, in a second folding step, the cart body rotates an additional 90 degrees about the same longitudinal axis to invert its orientation, and in a third folding step, the cart body pivots around the transverse axis to rest atop the carrier.

The folding arrangement is configured so that, upon release of a locking element, the cart body may pivot in a series of discrete steps around multiple axes. Specifically, the cart body first rotates approximately 90 degrees about a longitudinal axis of the foldable cart system, then continues rotating approximately another 90 degrees around that same or a coaxial longitudinal axis, thereby inverting its orientation. Finally, the cart body is pivoted about a substantially transverse axis so it can rest atop the carrier. This stepwise progression ensures that the cart body traverses clearly defined rotational increments, reducing the likelihood of misalignment or undue stress on pivot joints.

Because these rotations are separated into distinct phases, the user can manipulate the cart body without forcing components or risking structural damage. Each pivot action may be guided or constrained by a dedicated hinge, pin, or locking component that provides mechanical feedback, ensuring that the cart body can only move when properly unlocked and aligned. By utilizing dedicated axes of rotation, one aligned longitudinally for inversion and another aligned laterally for final stowage, the folding arrangement maintains precise control over the motion path. As a result, the cart body undergoes a smooth, controlled transition from a load-bearing configuration (e.g., with its wheels on the ground) to a compact, stowed position atop the carrier, providing a user-friendly experience. This systematic approach enhances durability by minimizing rotational friction and impact forces, while also promoting safety and ease of operation for the user, as accidental folding or jamming is significantly mitigated.

Optionally, the third connection point includes a locking-release mechanism configured to prevent rotation in at least one rotational direction for preventing unintentional movement.

The inclusion of a locking-release mechanism at the third connection point prevents rotation in at least one direction, conferring stability and preventing unintentional folding or unfolding during operation. Advantageously, the safety can be enhanced and a secure positioning of the cart body under load or in motion can be obtained. This effect is achieved by selectively restricting the pivot pathway via a purposeful locking element, ensuring that the cart body remains firmly in the chosen orientation until the release mechanism is deliberately engaged.

Optionally, the base portion of the cart body is formed to include mounting interfaces or attachment points for flexible cords and/or straps to stabilize cargo in both the extended and tray configurations.

These attachment points are distributed along the edges and surface of the base portion to facilitate secure stabilization of cargo in both the extended and tray configurations of the cart system. The mounting interfaces may take the form of hooks, loops, eyelets, slots, or other suitable structures that allow cords or straps to be easily connected and secured.

In the folded position, where the cart body is compacted and supported upon the rear portion of the cycle to function as a tray behind the seat, the mounting interfaces remain accessible and functional. Users can utilize the same attachment points to secure smaller items or personal belongings on the tray. This feature is particularly useful for holding items such as backpacks, briefcases, or laptops, which can be fastened securely while the cycle is in motion. The ability to stabilize cargo in both configurations significantly increases the versatility and utility of the foldable cart system.

In some embodiments, the base portion may feature multiple rows or patterns of mounting interfaces, offering users customizable options for securing their cargo. This modularity allows users to adjust the securing configuration based on the specific requirements of the items being transported.

The use of flexible cords and straps in conjunction with the mounting interfaces provides quick and convenient means of securing cargo without the need for complex mechanisms or additional equipment. Users can easily attach or detach their cargo as needed, making the cart system highly user-friendly. This feature also contributes to the overall efficiency of the cart system, as it minimizes the time and effort required to load and unload cargo.

Optionally, the cart body is fitted with at least two wheels sized and positioned such that, when the cart body is in the extended position, the cart body is supportable on the ground for carrying cargo.

When the cart body is extended rearwardly of the cycle, the wheels engage operatively with the ground. The sizing of the wheels is such that they provide adequate ground clearance and load-bearing capacity, enabling the cart to traverse various terrains smoothly while supporting the intended cargo weight. The positioning ensures that the wheels are spaced appropriately to offer stability, preventing tipping or imbalance during movement.

Optionally, the cycle is a bicycle.

The cart system can be used with various wheeled vehicles beyond standard bicycles. For instance, tricycles, e-bikes, recumbent bikes, handcycles, and other pedal-powered or electric-assisted cycles also benefit from additional cargo-carrying systems. The foldable cart system described herein can therefore be adapted or scaled to fit a range of cycle formats, ensuring that whether a user rides a traditional upright bike or a more specialized cycle, they can take advantage of a compact, versatile solution for transporting cargo.

In some examples, the foldable cart is used in conjunction with a folding bicycle. After the bicycle is folded in its conventional manner, the cart body is arranged in an extended position so that its base portion rests under or near the folded rear wheel of the bicycle. This effectively places the folded bicycle onto the cart's wheeled platform. By grasping the handlebars or seat of the folded bicycle, the user can then push or maneuver the combined assembly, much like a handcart. This arrangement is particularly advantageous in environments such as markets, sidewalks, or other areas where riding is not feasible or permitted. The cart's wheels carry most of the folded bicycle's weight, allowing the user to guide the bicycle conveniently without heavy lifting.

According to an aspect, the invention provides for a method of manufacturing a foldable cart system for use with a cycle, the method comprising: forming a carrier configured to be secured at or adjacent to a seat tube of the cycle, the carrier including a mounting structure; forming a cart body configured to be pivotally coupled to the carrier; and pivotally coupling the cart body to the carrier so that the cart body is adjustable between: an extended position, in which the cart body is deployed rearwardly of the cycle such that its wheels are arranged for operative engagement with the ground during use of the cycle, and a folded position, in which the cart body is folded into a compacted configuration and supported upon the rear portion of the cycle such that its wheels are repositioned to a non-operational state.

According to an aspect, the invention provides for a cycle comprising: a frame including a seat tube; a foldable cart system according to the disclosure, attached to the seat tube and configured to be selectively positioned between the extended position for carrying one or more objects and the folded position for forming a tray behind a seat of the cycle.

By integrating the foldable cart system directly into the cycle, the invention enhances the utility and functionality of the vehicle. It provides an efficient solution for carrying cargo while maintaining the option for a streamlined profile when the additional carrying capacity is not required.

According to an aspect, the invention provides for a method of folding a foldable cart system for use with a cycle, the foldable cart system including a carrier attachable to a rear portion of the cycle and a wheeled cart body pivotally coupled to the carrier via a folding arrangement that provides at least two pivot axes, the method comprising: providing the cart body in an extended orientation behind the cycle, wherein the cart body's wheels contact the ground to carry cargo; pivoting the cart body about a first pivot axis oriented substantially along a longitudinal direction of the cycle, thereby inverting the cart body from an upright orientation to an inverted orientation relative to the carrier; pivoting the cart body about a second pivot axis oriented substantially along a lateral direction of the cycle, thereby reorienting the cart body so that the cart body's upper side returns to a generally upward-facing position with the wheels in a non-operational state; and supporting the reoriented cart body atop the carrier behind a seat of the cycle, so as to form a tray-like configuration in which cargo may be carried.

The foldable cart system includes a carrier rigidly attached to the cycle, and a cart body connected to the carrier via an adaptable folding arrangement that facilitates multi-axis rotation. This arrangement comprises a first connection point at or adjacent to the carrier, a second connection point at or adjacent to the cart body, and a third connection point between the first and second connection points. The third connection point is configured to allow rotation of the cart body around at least two different axes: (i) a longitudinal axis generally parallel to the cart body's wheels, and (ii) a transverse axis oriented laterally relative to the cycle.

In an exemplary folding sequence, the cart body initially extends rearwardly behind the cycle in an operational position, with its wheels in contact with the ground. First, the cart body is rotated approximately 180 degrees about the longitudinal axis of the cart system (in two 90-degree steps), thereby inverting the cart body such that its upper side now faces downward. Next, the cart body is rotated about the lateral axis to rest atop the carrier in a folded configuration, returning the upper side to an upward-facing orientation. A locking-release mechanism may be included at or near the third connection point to secure the cart body in each of its various angular positions, while the first and second connection points provide additional pivot functionality, if desired, to ensure smooth reconfiguration of the cart body.

According to an aspect, the invention provides for a method of transporting a folded cycle using the foldable cart system of the present disclosure, the method comprising: folding the cycle into a compact configuration, placing the folded cycle onto the cart body while the cart body's wheels are engaged with the ground, and pushing or pulling the combined assembly so that the cart body supports the folded cycle and rolls on its own wheels. In this way, the need to carry the folded cycle by hand is reduced effectively.

In some examples the bicycle itself folds (e.g., a "folding bike"), the cart body can still be fully extended, and the bicycle folds so that the rear wheel or another part of the frame can rest on the extended cart base. The cart's small wheels then allow the user to roll or push the folded bike along sidewalks, markets, or indoor corridors. This feature is particularly beneficial for users who wish to avoid carrying the folded bicycle by hand.

It will be appreciated that any of the aspects, features and options described in view of the cart system apply equally to the system and method, and the described cycle and use. It will also be clear that any one or more of the above aspects, features and options can be combined.

### BRIEF DESCRIPTION OF THE DRAWING

The invention will further be elucidated on the basis of exemplary embodiments which are represented in a drawing. The exemplary embodiments are given by way of non-limitative illustration. It is noted that the figures are only schematic representations of embodiments of the invention that are given by way of non-limiting example.

In the drawing:
Fig. 1 shows a schematic diagram of an embodiment of a foldable cart system attached to a cycle;
Fig. 2 shows a schematic diagram of an embodiment of a carrier;
Fig. 3 shows a schematic diagram of an embodiment of a cart body;
Figs. 4a, 4b, 4c show a schematic diagram of an embodiment of a foldable cart system in different folding configurations;
Fig. 5 shows a schematic diagram of an embodiment of a foldable cart system attached to a cycle in an intermediate folding position;
Fig. 6 shows a schematic diagram of an embodiment of a foldable cart system attached to a cycle in an intermediate folding position;
Fig. 7 shows a schematic diagram of an embodiment of a foldable cart system attached to a cycle in a folded position;
Fig. 8a, 8b show a schematic diagram of embodiments of a foldable cart system attached to a cycle in a folded position;
Fig. 9 shows a schematic diagram of an embodiment of a foldable cart system attached to a cycle in a folded position towing another cycle; and
Fig. 10 shows a schematic diagram of an embodiment of a foldable cart system.

### DETAILED DESCRIPTION

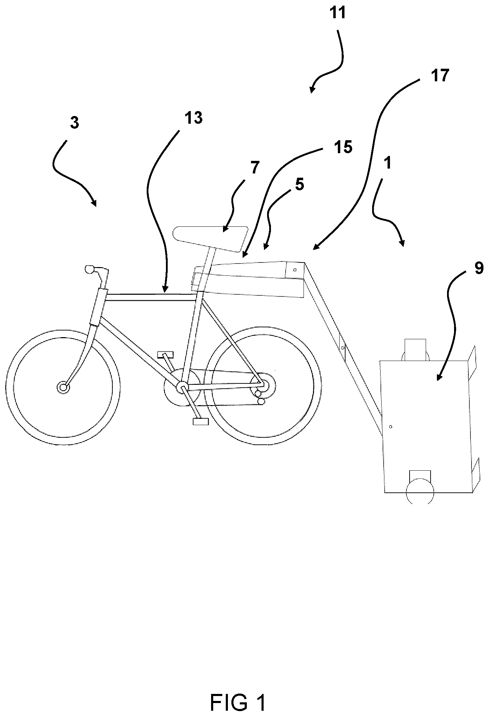

Fig. 1 shows a schematic diagram of an embodiment of a foldable cart system 1 attached to a cycle 3. In the shown example, the foldable bicycle cart system 1 includes a carrier 5 that is installed behind the bicycle seat 7 (or around the seat post/tube), and a cart body 9 that is pivotally coupled to the carrier 5. The carrier 5 is secured at or adjacent to the rear portion 11 of the bicycle frame 13 (often around the seat post), for example by a clamping bracket 15 or any other comparable mounting arrangement. Once installed, the carrier 5 provides a stable, largely fixed structure to which the cart body 9 is attached via one or more hinges or pivot pins 17.

The foldable bicycle cart system 1 may be configured to attach to a cycle (e.g., a bicycle) in a manner that enables multiple functions. The solid carrier 5 (sometimes referred to as a "carrier frame" or simply "carrier") can be attached to or around the rear portion of the bicycle, preferably around the bicycle's seat tube or seat post, just behind the seat. The system 1 can be folded such that the cart body 9 can be transitioned between at least two operational states/positions. The cart body 9 may be pivotally coupled to the carrier and can be moved or folded between multiple positions.

In some embodiments, the cart system 1 comes in distinct sizes (e.g., 28", 26", 24", or 20" nominal sizes) to accommodate a variety of bicycle frame geometries and wheel sizes. When mounted, the cart body 9 can be fully extended rearward for use as a cart, partially folded, or folded completely into a compact tray-like form behind the bicycle seat 7.

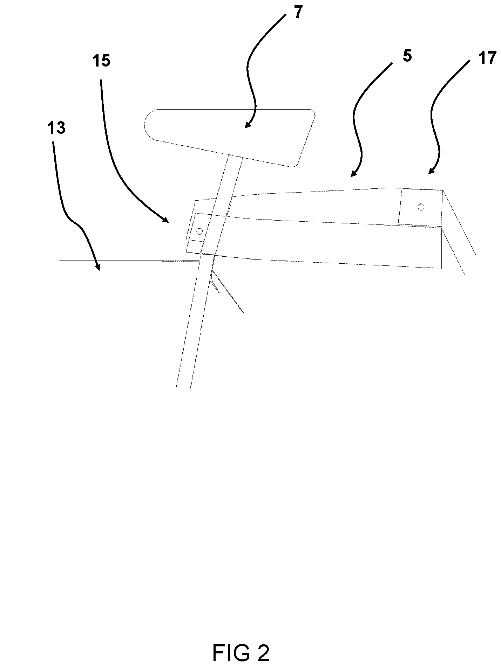

Fig. 2 shows a schematic diagram of an embodiment of a carrier 5. The cart body (not shown) is pivotally attached to the carrier assembly, which is mounted at or near the seat tube of the cycle 3.

In some examples, the foldable bicycle cart system 1 is adjustable between four distinct use modes or "functions," each corresponding to a particular configuration of the cart body.

In a first mode, the cart body is fully deployed behind the bicycle, resting on at least two wheels (for example, 12-inch wheels, though other sizes may be used). The fully extended configuration permits carrying a load, making it suitable for groceries, boxes, or other cargo. The base of the cart body 9 can include or accommodate upstanding side walls or fences, or use flexible cords and/or straps to secure cargo within the cart space.

In a second mode, the cart body is folded fully forward (toward the bicycle seat), it becomes a compact tray positioned behind the bicycle seat. In this tray configuration, the cart does not extend substantially beyond the rear wheel. Users may still transport smaller items (e.g., a standard bicycle bag, a laptop bag, or other personal items) on this tray. At least a portion of the cart body is locked or latched in place to remain secure in this folded position during normal riding.

Even when folded into the tray form, the cart body (or portions thereof) can slide or expand laterally (or horizontally) to provide a larger surface area. This extended tray configuration increases the tray capacity so that users may carry slightly larger items. A user can partially deploy telescoping or sliding rails within the cart base to expand the tray's width or length. In some examples, flexible cords, straps, or small hinged sidewalls may be employed to help secure the load in this mode.

In a third mode, with an appropriate towing bracket or adapter, the fully extended cart body can be configured to haul up to two additional bicycles. The towing bracket may couple the front wheel (or front fork) of a towed bicycle securely onto the cart.

In a fourth mode, when used with a folding bicycle, the cart body can be pivoted or oriented such that, once the bicycle is folded, the foldable cart supports the rear section of the folded bicycle. A user can then push the folded bike along on the cart's wheels, avoiding the need to carry the folded bicycle by hand.

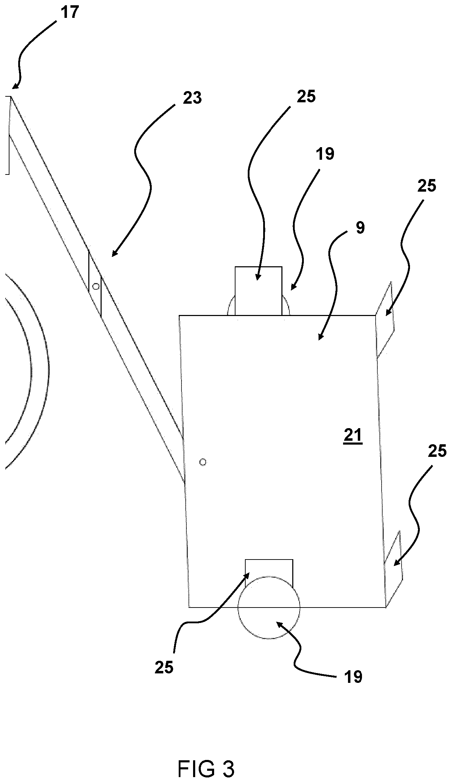

Fig. 3 shows a schematic diagram of an embodiment of a cart body 9 that extends rearwardly behind the cycle such that its wheels 19 contact the ground. A base portion 21 of the cart body 9 is substantially horizontal in this deployed mode, creating a load-carrying platform or cart bed. A pivot mechanism 23 is arranged that enables angular movement of the cart body 9 relative to the carrier 5 such as to allow the cart to swing between its extended operational position and its compact folded state. The pivot mechanism may consist of a hinge or rotational joint. Various arrangements may be utilized to perform this function.

In the fully extended position as depicted in fig. 3, the cart body 9 deploys rearward from the bicycle. The wheels 19 are engaged with the ground, supporting cargo transport. The cart's side walls 25 may be folded or extended depending on the configuration.

In some examples, side portions of the cart body 9 may be attached to the base portion 21 by pivoting or sliding. In some embodiments, they can be folded upward to form side walls and/or slid sideways to expand the available width.

A locking element may be arranged, e.g., a spring-loaded pin or latch, so as to keep the cart in this extended position during use. From the extended position, the user may release the locking element and rotate the cart body 9 upwardly around a pivot axis.

The carrier may be made out of various materials. Examples include steel tubing, aluminum alloy, or other rigid lightweight material. The cart body may use similar metallic or composite materials. The pivot joints can be designed to withstand repeated folding cycles. The wheels can be made for example out of plastic or metal hubs. Pneumatic or solid tires, sized to balance smooth rolling and compact form can also be used additionally or alternatively.

It will be appreciated that various types of locks and latches may be employed. For example, it may use spring-biased pins, cam levers, or other standard hardware known in the art for foldable carts or strollers.

Various modifications to the above-described system are possible. For instance, the cart may feature different wheel sizes, load capacities, or additional bracing bars. The base portion could use a mesh, perforated plate, or solid panel design. Moreover, while the described embodiments focus on bicycles, similar concepts may be adapted to other cycles, such as e-bikes, cargo bikes, and recumbent cycles, provided suitable attachment points exist around the seat post or seat tube region.

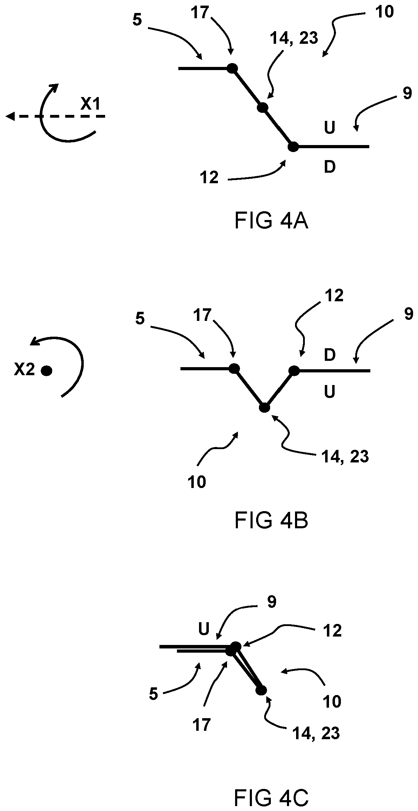

Fig. 4a-c show a schematic diagram of an embodiment of a simplified side view of a foldable cart system in different folding configurations. In fig. 4a, the cart system is in an extended position. In fig. 4b, the cart system is in a (temporary) intermediate folding position. In fig. 4c, the cart system is in a folded position.

In this example, the carrier 5 and the cart body 9 are interconnected via an adaptable folding arrangement 10. This adaptable folding arrangement 10 may include various structural components that enable the folding action. It may include a first connection point 17 at or adjacent to the carrier 5, a second connection point 12 at or adjacent to the cart body, and a third connection point 14, 23 disposed between the first connection point 17 and the second connection point 12. The first connection point 17 and the second connection point 12 each include a pivot element permitting at least a single axis of rotation for adjusting the angle of the cart body 9 relative to the carrier 5.

The third connection point 14 provides for at least two axes of rotation of the cart body 9 relative to the carrier 5. The third connection point 14 is configured to permit a first rotation around an axis parallel to the longitudinal direction X1 of the foldable cart system (cf. direction in which the cart system is intended to be moved when in extended position connected for example to a bicycle), so as to enable the cart body 9 to rotate at least 180 degrees relative to the carrier 5 (cf. rotation action in fig. 4a), so as to invert the upper side U of the cart body 9 from an upward-facing orientation (as seen in fig. 4a) to a downward-facing orientation (as seen in fig. 4b). The downward side is indicated by D. The third connection point 14 is further configured to permit a second rotation around an axis parallel to a lateral direction X2 of the foldable cart system (traverse to the longitudinal direction X1), such that when the cart body has been inverted, it is then rotatable (cf. fig. 4b) to rest atop the carrier 5 with the cart body's upper side U returned to an upward-facing orientation (cf. fig. 4c). The arrow of the lateral direction X2 extends out of the plane viewed in fig. 4a-4c and is therefore shown as a dot.

The folding arrangement 10 is configured such that in a first folding step, the cart body rotates approximately 90 degrees about the longitudinal axis of the cart system, in a second folding step, the cart body rotates an additional 90 degrees about the same longitudinal axis to invert its orientation (cf. fig. 4b), and in a third folding step, the cart body pivots around the transverse axis to rest atop the carrier (cf. fig. 4c).

In some examples, at least the third connection point 14 includes a locking-release mechanism configured to prevent rotation in at least one rotational direction for preventing unintentional movement.

Reversing these steps allows the cart to be returned to the extended position. Additional locking or sliding operations may be performed if the user wishes to expand the tray for more cargo space in the folded configuration.

The carrier 5 can remain permanently attached to the bicycle, or it can be easily detached (e.g., via quick-release) when the user wants to remove the entire cart system for storage or for riding without any cargo apparatus.

In the folded tray configuration, the system has a relatively low profile, allowing the bicycle to be parked or stored without significantly increasing its footprint.

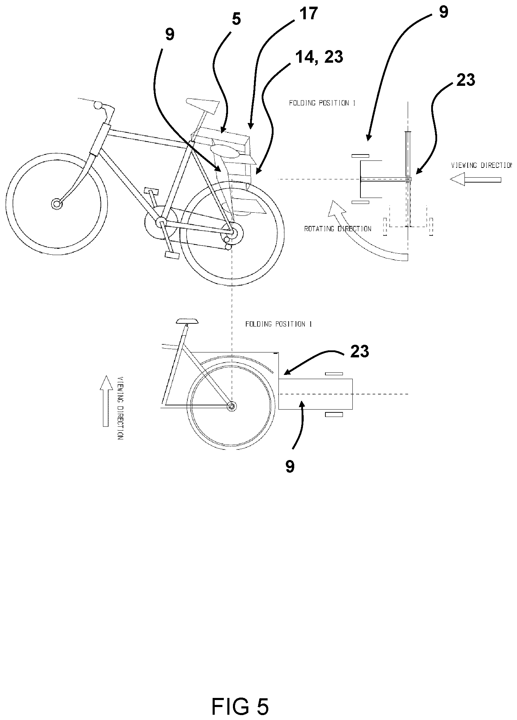

Fig. 5 shows a schematic diagram of an embodiment of a foldable cart system attached to a cycle in an intermediate folding position. In the depicted (temporary) intermediate folding position, the cart body has been rotated 90 degrees sidewards (around a line substantially parallel to the longitudinal direction of the carrier 5).

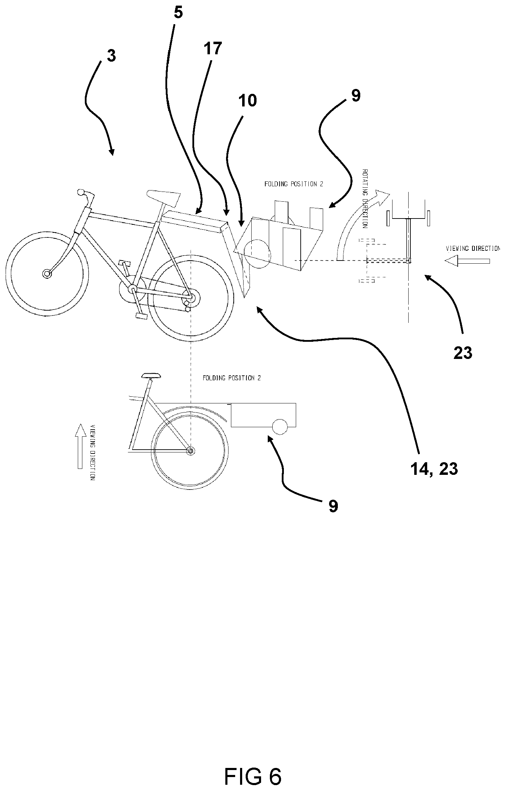

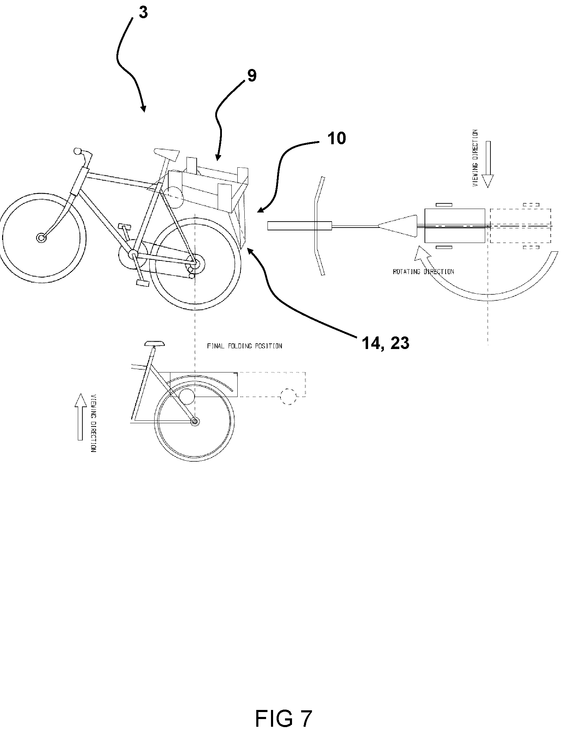

The folding arrangement 10 is provided with a first connection point 17 near the carrier 5, a second connection point at the cart body 9, and a third connection point 14, 23 situated between the two. Enabling multiple axes of rotation allows the cart body to be inverted from an upward-facing orientation to a downward-facing orientation (cf. fig. 6) and then returned upright atop the carrier 5 (cf. fig. 7). This yields a highly compact, space-efficient folding configuration that facilitates both storage and convenient transition between extended and folded states. The additional pivot elements at the third connection point 14, 23, which permit rotation along both the longitudinal and lateral axes, allow the cart body t9 o undergo a full inversion and subsequent reorientation, in an advantageous manner.

Fig. 6 shows a schematic diagram of an embodiment of a foldable cart system attached to a cycle in an intermediate folding position. The cart body may be arranged to swing in an arc toward the back of the bicycle seat.

The shown intermediate position is primarily a transitional stage; the wheels of the cart body 9 gradually move into a higher, non-operational orientation. In some examples, additional hinges or fold joints can allow the base portion and/or side portions of the cart body 9 to collapse further, if needed.

The folding arrangement 10 is configured to rotate the cart body in a series of steps about differing axes, e.g. first approximately 90 degrees around a longitudinal axis, then another 90 degrees to invert its orientation, (or 180 degrees in one go), as depicted in fig. 5, and then pivoting around a transverse axis to rest atop the carrier 5. A user-friendly, stepwise folding procedure is obtained that promotes reliable repositioning without forcing or misalignment. A controlled transition from a load-bearing position to a stowed position can be obtained in an advantageous way, reducing the risk of improper folding and enhancing overall ease of use.

Fig. 7 shows a schematic diagram of an embodiment of a foldable cart system attached to a cycle in a folded position.

In some examples, once the cart body has been fully transitioned to a compact, folded arrangement atop or immediately behind the cycle's rear portion, it functions as a bicycle tray. In this tray configuration, the cart body no longer rests on its own wheels; instead, it is pivoted and locked into place so as to form a stable platform behind the bicycle seat. The resulting bicycle tray can hold various cargo items, including smaller bags or packages, or can accommodate bicycle bags on either side of the tray area. In certain embodiments, a fence or barrier formed by a flexible cord network can be attached around the perimeter of the tray to help prevent items from sliding off during transit. This cord fence or comparable enclosure can be readily removed or repositioned based on user preference.

The term longitudinal direction refers to the direction that extends substantially from the front of the cart system to the rear of the cart system. For example if in the extended position the cart system is perfectly aligned with the cycle, the longitudinal direction extends from the front of the cycle (near the handlebars and front wheel) to the rear of the cycle (near the rear wheel). In simpler terms, it is the forward-backward axis along which the cycle primarily travels, and thus the cart system attached thereto is intended to primarily travel.

When the cart system is attached to the cycle, the longitudinal direction is the same axis the rider faces and along which the cycle moves on a road or path.

It will be appreciated that any reference to rotation about an axis parallel to the longitudinal direction typically means pivoting in a way that can after 180 degrees rotation flip or invert the cart body end-over-end in line with the cycle's front-to-rear orientation. In various embodiments, a pivot axis oriented parallel to the longitudinal direction is used to invert the cart body by approximately 180 degrees. During folding, the cart body initially faces upright; once rotated around this longitudinal pivot axis, the top side of the cart body faces downward (i.e., it becomes inverted). This step can for example be performed in two roughly 90-degree increments but is fundamentally about rotating around the lengthwise axis of the cart system.

The lateral direction is the side-to-side axis of the foldable cart system and cycle. It runs generally perpendicular to the longitudinal axis. From a rider's perspective, the lateral direction goes from left to right relative to the cycle's upright position.

When the cycle is on a level surface, the lateral direction corresponds to the horizontal axis that would pass through both sides of the cycle frame (for example, from the left pedal side to the right pedal side).

A pivot axis oriented parallel to the lateral direction is typically used for the final step of repositioning the cart body once it has been inverted around the longitudinal axis.

After the cart body is flipped upside-down (by rotation around the longitudinal axis), the second pivot around the lateral axis realigns it so that the top surface of the cart body faces upward again, allowing it to rest in a folded or tray position behind the seat.

This second rotation around the lateral axis effectively "swings" the inverted cart body to lie atop the carrier.

The system first pivots the cart body around an axis substantially parallel to the front-to-rear axis of the cycle. This action inverts the cart body so that its top side (originally facing upward) is turned downward.

Once inverted, the cart body is then pivoted around an axis running substantially from one side of the cycle to the other (i.e., in the lateral direction). This lateral rotation allows the inverted cart body to be swung up and over so that its top side once again faces upward, ending up in a folded or tray-like position behind the seat.

By employing at least these two distinct pivot axes, one parallel to the longitudinal direction and another parallel to the lateral direction, the foldable cart system achieves a compact, streamlined stowage configuration, while also enabling easy deployment back to the extended, ground-supporting position.

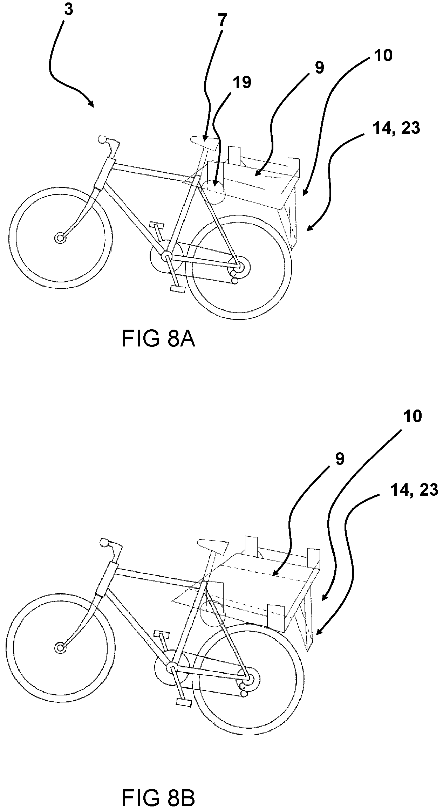

Fig. 8a, 8b show a schematic diagram of embodiments of a foldable cart system attached to a cycle in a folded position. Ultimately, once rotated fully forward/upward, the cart body 9 sits compactly behind and slightly above the rear wheel, often just behind the bicycle seat 7. The wheels 19 are now stowed in a non-operational state, no longer contacting the ground.

In this position, the folded cart body 9 can function as a tray, providing a smaller cargo-support surface behind the seat of the cycle 3. In some examples, an optional sliding mechanism may be arranged and/or side extensions provided that can still be deployed outward or inward to increase or reduce, respectively the size of the tray surface even when the cart body is folded.

A lock (e.g., another quick-release pin or latch mechanism) may engage to keep the cart body 9 securely in this folded/tray configuration.

Throughout these movements, the primary pivot 17 at the junction between the carrier 5 and the cart body 9 is the main hinge that allows the cart to swing from an extended cart position to a folded tray position. In addition, secondary pivots or sliding tracks accommodate folding of side panels or the telescoping of the base portion. One or more quick-release or tool-less connectors at the carrier 5 may also permit the entire assembly to be removed from the bicycle if desired.

In some examples, at least one portion of the folded cart body (for example, its side portions or base portion) is slidably extendable. By moving sliding rails, telescoping supports, or hinged segments, the tray's footprint can be expanded to approximately double its original area, thus increasing the cargo capacity (cf. fig. 8b). This expansion can remain compatible with the cord-based fence, which may be adjusted accordingly to secure larger loads. The ability to enlarge the tray surface enables cyclists to carry bulkier or additional items without needing to deploy the entire cart into its ground-engaging position.

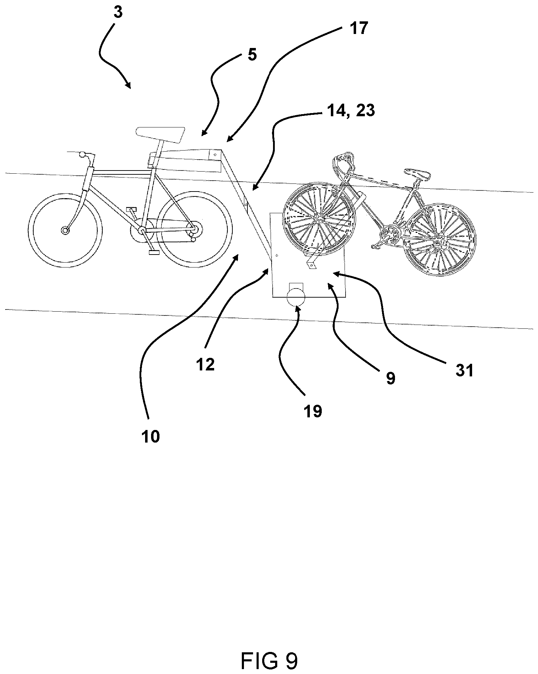

Fig. 9 shows a schematic diagram of an embodiment of a foldable cart system attached to a cycle in a folded position towing another cycle.

For towing additional bicycles, the cart body 9 may include or be retrofitted with a towing bracket 31 that attaches securely to a portion of the towed bike (e.g., fork or front dropout) so that the additional bicycle's front wheel is lifted off the ground. The bracket may be designed for easy attachment and detachment, allowing quick transitions between towing and normal cart use.

In some examples, the foldable cart system provides a towing bracket 31 or comparable attachment feature that permits the secure transport of multiple additional bicycles of any size (for example two). Specifically, when the cart body is in its extended position (with its wheels on the ground), the user can mount the front wheel, fork, or other structural portion of the towed bicycle(s) onto the towing bracket. The bracket 31 locks or clamps these additional cycles in place so that they remain stable while being towed behind the primary cycle. This towing function is especially useful when one needs to transport an extra bicycle for another rider, or when an inoperative bicycle must be carried to a repair location

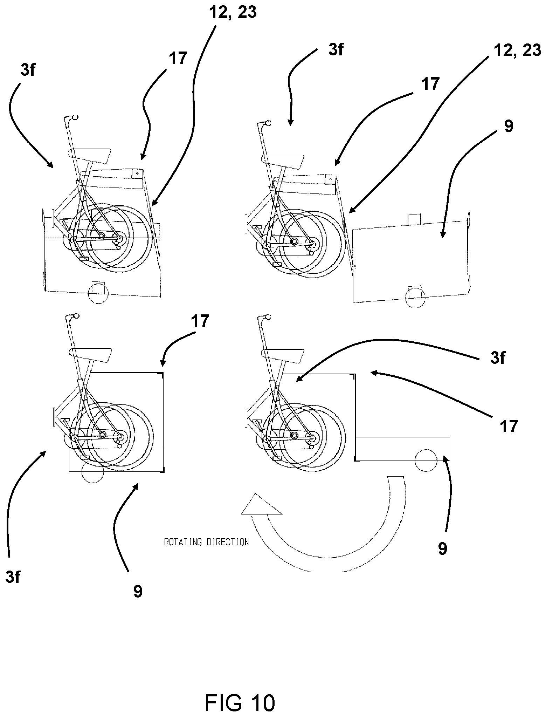

Fig. 10 shows a schematic diagram of an embodiment of a foldable cart system. The foldable bicycle cart system can be particularly useful for folding bicycles because it effectively takes over the role of supporting and rolling the folded bike, sparing the user from having to carry the folded bicycle.

As depicted in fig. 10, the system provides for a push-cart functionality. The cart body's folding and locking mechanisms are leveraged so that the folded bicycle effectively rides on top of the cart's base and wheels, allowing the user to navigate on foot without bearing the entire weight of the folded bike 3f. This is particularly valuable in settings where riders transition frequently between riding and walking (e.g., multi-modal commutes involving trains, shopping centers, or office complexes).

First, the user folds the bicycle in its usual manner (as per the bicycle manufacturer's folding mechanism).

Once folded, the bike typically becomes more compact, with the main frame pivoted around a hinge (or similar mechanism), bringing the front wheel in proximity to the rear wheel.

With the cart system 1 attached to the seat tube (or seat post area), the user adjusts the cart body from its normal riding or cargo-hauling position into a fully extended position suitable for supporting the folded bicycle.

In some designs, this may involve releasing a latch and rotating or pivoting the cart base so it is positioned underneath the area where the rear section of the folded bike will rest.

The cart's wheels remain in ground-contact mode, much like a small dolly or handcart.

The user then places the folded bicycle so that its rear section (including the folded rear wheel) is supported by the base portion of the cart.

Depending on the specific design, the folded bicycle may sit partly on its bottom bracket zone, seat stays, or another sturdy part of the frame that aligns naturally with the cart body.

Some embodiments may include straps, hooks, or small retaining fences (which can be folded away when not in use) to prevent the folded bicycle from shifting or tipping off. The geometry of the folded bike and the cart's sidewalls (or side rails) may be sufficient to keep everything stable.

Once the folded bicycle is placed on the cart base and stabilized, the user can grasp either the bicycle's handlebars or seat and simply push the rig forward, much like rolling a piece of luggage or pushing a cart.

The cart's wheels (typically 12" or similarly sized) support both the cart body and the folded bike, allowing for smooth movement over sidewalks, hallways, or other relatively flat surfaces.

By taking advantage of the cart's ground-contacting wheels, the user does not have to carry the folded bicycle's full weight. The bicycle can be maneuvered in tight or pedestrian-heavy spaces (e.g., train stations, office hallways, elevators) more easily than if the user were carrying it. With the bike folded and resting on the cart base, the overall length of the assembly can be reduced, which is especially convenient in crowded areas.

When the user is ready to ride again, they can unfold the bike as normal, pivot or fold the cart body back into tray mode (or any other desired mode), and continue riding. Because folding bicycles come in different sizes and hinge layouts, the cart system can be offered in multiple sizes (20", 24", 26", and 28" versions, for example) to ensure compatibility with the typical folded geometry.

The universal or semi-universal design of the cart mounting mechanism allows various models of folding bicycles to take advantage of this push-cart feature, as long as the cart is appropriately sized and attached.

The foldable bicycle cart system offers a versatile solution for cyclists who wish to transport cargo, tow additional bikes, and/or conveniently push a folding bicycle when folded. The modular design, with multiple folding positions and extendable tray functionality, ensures that the cart can adapt to a wide range of real-world uses while still allowing normal riding. By attaching to the seat tube (or an equivalent location at the bicycle's rear) and featuring a pivotally coupled cart body, the device quickly converts between a full cargo cart, a compact tray, or a towing/push cart configuration. Various latch and locking mechanisms, plus optional quick-release features, provide the user with an efficient and convenient cargo-handling system that does not require permanent disassembly or specialized tools.

It will be appreciated that the term cycle as used herein is intended to encompass a broad range of wheeled vehicles, not limited solely to traditional pedal-driven bicycles. The term may include, for example, unicycles, bicycles with multiple wheels (e.g., tricycles, quad cycles), as well as battery-powered or engine-powered cycles, e-bikes, mopeds, and other similar vehicles configured for personal transportation. This inclusive definition ensures that any reference to a cycle in the present disclosure may be applied to various vehicle types and power sources, thereby reflecting the versatility and wide applicability of the foldable cart system described herein.

Herein, the invention is described with reference to specific examples of embodiments of the invention. It will, however, be evident that various modifications, variations, alternatives and changes may be made therein, without departing from the essence of the invention. For the purpose of clarity and a concise description features are described herein as part of the same or separate embodiments, however, alternative embodiments having combinations of all or some of the features described in these separate embodiments are also envisaged and understood to fall within the framework of the invention as outlined by the claims. The specifications, figures and examples are, accordingly, to be regarded in an illustrative sense rather than in a restrictive sense. The invention is intended to embrace all alternatives, modifications and variations which fall within the scope of the appended claims. Further, many of the elements that are described are functional entities that may be implemented as discrete or distributed components or in conjunction with other components, in any suitable combination and location.

In the claims, any reference signs placed between parentheses shall not be construed as limiting the claim. The word 'comprising' does not exclude the presence of other features or steps than those listed in a claim. Furthermore, the words 'a' and 'an' shall not be construed as limited to 'only one', but instead are used to mean 'at least one', and do not exclude a plurality. The term "and/or" includes any and all combinations of one or more of the associated listed items. The mere fact that certain measures are recited in mutually different claims does not indicate that a combination of these measures cannot be used to an advantage.

## Claims

1. A foldable cart system for use with a cycle, the system being configured to be attachable to a rear portion of the cycle, the foldable cart system comprising:
a carrier configured to be secured at or adjacent to the rear portion of the cycle, the carrier including a mounting structure; and
a wheeled cart body pivotally coupled to the carrier, the cart body being configured to carry one or more objects, and wherein the cart body is adjustable between at least an extended position, in which the cart body is deployed rearwardly of the cycle such that its wheels are arranged for operative engagement with the ground, and a folded position, in which the cart body is folded into a compacted configuration and supported upon the rear portion of the cycle such that its wheels are repositioned to a non-operational state.

2. The foldable cart system according to claim 1, wherein, in the folded position, the cart body is configured to serve as a tray positioned behind a seat of the cycle, wherein the tray is configured to support cargo.

3. The foldable cart system according to claim 1 or 2, wherein the cart body comprises a base portion and side portions, at least one of the portions is adjustably extendable to increase or decrease a cart body's cargo-carrying space.

4. The foldable cart system according to claim 3, wherein the cart body comprises a sliding mechanism for adjusting a width of the base portion in at least one of the extended position or the folded position.

5. The foldable cart system according to any one of the preceding claims, wherein the carrier is configured to be detachable from the cycle by way of detachment mechanism that does not require the use of tools, such as for example a quick-release mechanism.

6. The foldable cart system according to any one of the preceding claims, wherein the cart body includes upstanding walls along at least two sides of the base portion, the upstanding walls being pivotable or foldable to reduce the profile of the cart body when in the folded position.

7. The foldable cart system according to any one of the preceding claims, further comprising a towing bracket configured to secure at least one additional cycle to the cart body when the cart body is in the extended position.

8. The foldable cart system according to any one of the preceding claims, further comprising one or more locking elements operable to releasably secure the cart body in each of the extended position and the folded position.

9. The foldable cart system according to any one of the preceding claims, wherein the carrier is configured to attach around or adjacent to a seat tube of the cycle, and wherein the cart body is positionable immediately behind the cycle seat in the folded position to form a rear tray.

10. The foldable cart system according to any one of the preceding claims, wherein the cart body is configured such that in the folded position it does not substantially extend beyond the cycle's rear wheel.

11. The foldable cart system according to any one of the preceding claims, wherein the carrier and the cart body are interconnected via an adaptable folding arrangement comprising:
a first connection point at or adjacent to the carrier
a second connection point at or adjacent to the cart body; and
a third connection point disposed between the first connection point and the second connection point;
wherein the first connection point and the second connection point each include a pivot element permitting at least a single axis of rotation for adjusting the angle of the cart body relative to the carrier;
wherein the third connection point provides for at least two axes of rotation of the cart body relative to the carrier, wherein the third connection point is configured to permit a first rotation around an axis parallel to the longitudinal direction of the foldable cart system, so as to enable the cart body to rotate at least 180 degrees relative to the carrier, so as to invert the upper side of the cart body from an upward-facing orientation to a downward-facing orientation, and wherein the third connection point is further configured to permit a second rotation around an axis extending substantially in a lateral direction of the foldable cart system, such that when the cart body has been inverted, it is then rotatable to rest atop the carrier with the cart body's upper side returned to an upward-facing orientation.

12. The foldable cart system according to any one of the preceding claims, wherein the folding arrangement is configured such that in a first folding step, the cart body rotates approximately 90 degrees about the longitudinal axis of the cart system, in a second folding step, the cart body rotates an additional 90 degrees about the same longitudinal axis to invert its orientation, and in a third folding step, the cart body pivots around the transverse axis to rest atop the carrier.

13. The foldable cart system according to any one of the preceding claims, wherein the third connection point includes a locking-release mechanism configured to prevent rotation in at least one rotational direction for preventing unintentional movement.

14. A method of manufacturing a foldable cart system for use with a cycle, the method comprising:
forming a carrier configured to be secured at or adjacent to a seat tube of the cycle, the carrier including a mounting structure;
forming a cart body configured to be pivotally coupled to the carrier; and
pivotally coupling the cart body to the carrier so that the cart body is adjustable between:
an extended position, in which the cart body is deployed rearwardly of the cycle such that its wheels are arranged for operative engagement with the ground during use of the cycle, and
a folded position, in which the cart body is folded into a compacted configuration and supported upon the rear portion of the cycle such that its wheels are repositioned to a non-operational state.

15. A cycle comprising:
a frame including a seat tube;
a foldable cart system according to any one of the preceding claims 1-13, attached to the seat tube and configured to be selectively positioned between the extended position for carrying one or more objects and the folded position for forming a tray behind a seat of the cycle.
